# EUROPEAN PATENT SPECIFICATION

(11) **EP 0 361 650 B1**
(45) Date of publication and mention of the grant of the patent: **15.06.1994**
(21) Application number: 89307300.7
(22) Date of filing: 19.07.1989
(51) Int. Cl.: C09K 11/84, C09K 11/64, H01J 29/20

(54) **Green light emitting phosphor**
Grünlicht emittierendes Phosphor
Matériau luminescent émettant une lumière verte

(30) Priority: 29.09.1988 KR 8812624; 29.09.1988 KR 8812626; 22.11.1988 KR 8815344; 23.12.1988 KR 8817344; 26.12.1988 KR 8817527
(43) Date of publication of application: 04.04.1990
(73) Proprietor: SAMSUNG DISPLAY DEVICES CO., LTD., Hwaseong-gun, Kyungki-do (KR)
(72) Inventor: Yang, Jun-mo, Kyunggi-do (KR); Kim, Woo-chan, Pusan (KR)
(74) Representative: Holmes, Michael John

(56) References cited:
- DE-A- 2 856 053
- JAPANESE PATENT OFFICE, TOKYO, JAPAN, FILE SUPPLIER JAPS; & JP-A-57 126 045 (MITSUBISHI DENKI K.K.)
- JAPANESE PATENT OFFICE, TOKYO, JAPAN, FILE SUPPLIER JAPS; & JP-A-56 042 942 (TOSHIBA CORP.)
- JAPANESE PATENT OFFICE, TOKYO, JAPAN, FILE SUPPLIER JAPS; & JP-A-57 174 832 (TOKYO SHIBAURA DENKI K.K.)
- JAPANESE PATENT OFFICE, TOKYO, JAPAN, FILE SUPPLIER JAPS; & JP-A-63 254 659 (MITSUBISHI ELECTRIC CORP.)

## Description

The present invention relates to a green emitting phosphor for use in a color cathode ray tube, and a cathode ray tube using the said phosphor. More particularly, the present invention relates to a copper, gold and aluminum activated zinc sulphide green emitting phosphor having baking and luminescent characteristics improved by adding at least a trace of one element selected from the group consisting of Tb, Sc and La; and a color cathode ray tube coated with a phosphor layer comprising of a green emitting phosphor having a formula [ZnS:Cu, Au, Al, M] (where M indicates at least one element of Tb, Sc and La).

Generally, a color cathode ray tube is of a construction such that the luminescent screen is coated with red, green and blue emitting phosphors in the form of dots or stripes, and these phosphor layers are excited by electron beams projected from corresponding electron guns through a shadow mask so that the colors may be reproducted differently depending on the excitation levels.

In the conventional technology, europium activated yttrium oxysulphide phosphor (Y₂ O₂ S: Eu) or europium activated yttrium oxide phosphor (Y₂ O₃ : Eu) is used as the red emitting phosphor, while silver activated zinc suplphide phosphor (ZnS: Ag) is used as the blue emitting phosphor.

Usually, the green emitting phosphor for use in a color cathode ray tube includes a copper and aluminum activated zinc sulphide phosphor (hereinafter often referred to as " ZnS: CuAl"), a copper and aluminum activated zinc-cadmium sulphide phosphor(hereinafter often referred to as "(ZnCd)S: CuAl"), or a copper, gold and aluminum activated zinc sulphide phosphor (hereinafter often referred to as "ZnS: CuAuAl").

Of the above mentioned phosphors, the ZnS:CuAl phosphor is slightly shifted in emission color to the shorter wavelength side, and therefore, shows an insufficiency in the white luminance color when it is used in a color cathode ray tube. Further, in the case where the white color is to be displayed, the current allocation for the red emitting phosphor which is the lowest in the light emission efficiency among the red, blue and green emitting phosphor has to be increased, thereby shortening the life expectancy of the cathode or the electron gun, and ultimately deteriorating the quality of image formed on the cathode ray tube. Due to this disadvantage, phosphor of this type is not used in most cases at present.

The (ZnCd)S: CuAl phosphor is usually superior to the ZnS: CuAl phosphor and the ZnS: CuAuAl phosphor in its emission color and the emission luminance, but the cadmium(Cd) included in the phosphor is toxic to the human body and causes air pollution, and therefore, its use has been discouraged (See Japanese Patent Publication No. 55-33834).

Therefore, instead of the phosphors ZnS: CuAl and (ZnCd)S: CuAl, the phosphor ZnS:Cu Au Al has recently been used as the green emitting component for a color cathode ray tube.(See Japanese Patent Publication No. 60-21713.)

However this ZnS: Cu Au Al green emitting phosphor is not desirable as it has an emission luminance which is about 5 ∼ 12% lower than the (Zn Cd)S:Cu Al green emitting phosphor, and especially in a high contrast color cathode ray tube, a phosphor having a high emission luminance is demanded commercially.

However this ZnS:Cu Au Al phosphor is apt to decompose, during the ball mill treatment, and the baking process for the phosphor layer of the cathode ray tube, as the gold used as the activator is unstable at the centre of the light emission compared with aluminum or copper. Therefore the emission luminance of the phosphor decreases, while the emission color is also shifted to the shorter wavelength side, thereby causing the shortening of the life expectancy of the cathode ray tube and lowering the productivity.

JP-A-6254785 describes the reduction of "burning characteristic" (ie. deterioration) of phosphor by using cerium. This leads to the maintenance of the luminance of the phosphor at a reasonable level but there is no increase in the luminance over the initial luminance of the phosphor.

It is an object of the present invention to provide a green emitting phosphor having a high emission luminance, and improved baking and current saturation characteristics.

It is another object of the present invention to provide a cathode ray tube, and particularly a color cathode ray tube having a phosphor layer in which the beam current ratio of the electron gun is increased, and in which the green emitting phosphor is thermally stabilized and results in high contrast.

To achieve the above objects, in the present invention there is added to the raw material paste of the ZnS:Cu Au Al phosphor a trace of at least one element selected from the group consisting of Tb, Sc and La to improve the emission luminance. Further, the composition of the phosphor ZnS: CuAuAl according to the present invention is such that, in the case where the amount of copper as an activator is 2 X 10⁻ ⁵ g to 3 x 10⁻ ⁴ g , the amount of gold as an activator is 5 x 10⁻ ⁵ g to 2.5 x 10⁻ ³ g, and the amount of aluminum as a coactivator is 3.5 x 10⁻ ⁵ g to 5 x 10⁻ ² g per 1g of the host material zinc sulphide, the amounts of the material to be additionally selectively added will be: terbium(O<Tb≦ 6 x 10⁻ ⁵ g), scandium(O<Sc≦ 2.0 x 10⁻ ⁴ g), and lanthanum(O<La≦ 1.2 x 1C⁻ ³ g).

Further, in the process of preparing the ZnS:Cu Au Al M phosphor according to the present invention, in the case where at least one element of Tb, Sc and La is added at the step of mixing the raw materials, the respective amount of activators, Cu, Au and Al are conveniently 2 x 10⁻ ⁵ g to 3 x 10⁻ ⁴ g, 5 x 10⁻ ⁵ g to 2.5 x 10⁻ ⁴ g, and 3.5 x 10⁻ ⁵ g to 5.0 x 10⁻ ² g. Ce and/or Eu may additionally be added such that Og<Ce ≦ 2.5 x 10⁻³g and Og<Eu ≦ 3 x 10⁻⁴g Of the additions, at least one of them will be used, and thus the luminance of the phosphor is enhanced without substantially varing its emission color, as well as its characteristics being thermally stabilized. This phosphor according to the present invention having the formula [ZnS: Cu Au Al M] (where M indicates one element selected from the group consisting of Tb, Sc and La) has a higher emitting luminance compared with the phosphor ZnS:Cu Au Al according to the conventional technology which does not include Tb, Sc and/or La, while its emission color is substantially the same as that of the conventional ones. Here Tb, Sc and La are thought to be playing the role of sensitizers within the crystals of the host material, zinc sulphide.

The present invention also provides a process for preparing [ZnS: Cu Au Al M] phosphor according to the present invention.

A process for preparing a green emitting phosphor comprising copper, gold and aluminum in the amounts of 2 x 10⁻ ⁵ g to 3 x 10⁻ ⁴ g , 5 x 10⁻ ⁵ g to 2.5 x 10⁻ ³ g, and 3.5 x 10⁻ ⁵ g to 5 x 10⁻ ² g, respectvely per 1 gram of the host material zinc sulphide is composed of the step of
(a) preparing the mixture of zinc sulphide, Cu, Au, Al, at least one element selected from the group consisting of Tb, Sc and La expressed as each compound form, and a flux agent, and mixing it thorougly conveniently by using the mixing machine (the amounts of said Tb, Sc and La to be selectively added are (0 < Tb≦ 6 x 10⁻ ⁵ g), (0 < Sc ≦ 2.0 x 10⁻ ⁴ g), and (0< La ≦ 1.2 x 10⁻ ³ g, respectively).
(b) Baking the said mixture put into the heating vessel under a reducing atmosphere conveniently containing hydrogen sulfide or carbon disulfide gas at 950 to 1050°C for 30 minutes to 6 hours,
(c) and then, washing, drying and grading the obtained phosphor.

The composition of the phosphor ZnS: CuAuAl according to the present invention is conveniently such that, in the case where an amount of copper is 2 x 10⁻ ⁵ g to 3 x 10⁻ ⁴ g , an amount of gold is 5 x 10⁻ ⁵ g to 2.5 x 10⁻ ³ g, and an amount of aluminum is 3.5 x 10⁻ ⁵ g to 5 x 10⁻ ² g per 1 g of the host material zinc sulphide, the amounts of the material to be additionally selectively added will be: terbium (0 < Tb ≦ 6 x 10⁻ ⁵ g), scandium (0 < Sc ≦ 2.0 x 10⁻ ⁴ g), and lanthanum ( 0 < La ≦ 1.2 x 10⁻ ³ g).

To the host material zinc sulphide, the activators are added in such a manner that copper (Cu) is added in compound form such as copper sulphate(CuSO₄ · 5H₂ O), or copper nitrate [Cu(NO₃ )₂ · 6H₂ O], gold (Au) is added in compound form such as chloroauric acid (HAuCl₄ · 2H₂ O); and the coactivators are added in such a mannner that aluminum (Al) is added in compound form such as aluminum sulphate (Al₂ (SO₄ )₃ · 18H₂ O), aluminum nitrate(Al(NO₃ )₃ · 9H₂ O), and the like, while Cerium may be additionally added in compound form such as CeO₂ or (Ce(NO₃)₃ terbium is added in compound form such as terbium oxide (Tb₄ O₇ ) and terbium fluoride (TbF₃ ), europium may additionally be added in compound form such as europium oxide (Eu₂ O₃ ) and europium chloride (EuCl₃ ), scandium is added in compound form such as scandium oxide (Sc₂ O₃ ) and the like, lanthanium is added in compound form such as lanthanium oxide (La₂ O₃ ) and the like.

The above materials can be added by a dry method or a wet method in which an appropriate solvent is used. In addition to the above materials, alkali metal halides, alkaline earth metal halides and ammonium halide can be used as the general flux. Furthermore, sulfur can be added as an antioxidant.

The above-mentioned activators, coactivators, and additives have to be adequately mixed together by means of a ball mill or a milling rod. The mixture of the materials obtained through the above mentioned mixing operations is filled into a pot made of a heat resistant material such as quartz or alumina, and is baked in it. The baking process is carried out in a reducing atmosphere containing hydrogen sulphide or carbon disulphide gas. The desirable baking temperature is in the range of 950°C to 1050°C , and the duration of the baking can vary depending on the baking temperature, but comes within the range of 30 minutes to 6 hours.

The phosphor obtained after the baking treatment is subjected to various steps such as washing, drying, and grading and the like to finally obtain the green emitting phosphor according to the present invention. The phosphor according to the present invention thus obtained will display a high emission luminance of green color and will be thermally stabilized.

A cathode ray tube may be manufactured based on the known method, using [ZnS:Cu Au Al M] (where M is at least one element selected from the group consisting of Tb, Sc and La) phosphor as the green luminescent component, Y₂ O₂ S: Eu phosphor as the red luminescent component, and ZnS: Ag phosphor as the blue luminescent component. In this process, the baking temperature after the formation of the phosphor layer was maintained at 460°C for several hours, but even after such a step, the green emitting phosphor [ZnS: Cu Au Al M] of the phosphor layer of the cathode ray tube showed the emission luminance and emission color almost the same as that before the formation of the phosphor layer.

The invention will now be further described with reference to the accompanying drawings in which:
- FIGS. 1(A) and 1(B): are graphs showing the variation of luminescent characteristics with Tb content of a phosphor of the present invention;
- FIG. 1(C): is a graph showing the variation of relative emission luminance with the beam current density, and compares the characteristics between the phosphor of the present invention (b) and the prior phosphor (a);
- FIG. 2(A): is a graph showing the relationship between the amount of Sc present and the x value of the color point in the Standard Chromaticity Diagram System CIE in a phosphor according to the present invention;
- FIG. 2(B): is a graph showing the relationship between the amount of Sc present and the emission luminance in [ZnS: Cu Au Al Sc] phosphor according to the present invention wherein the emission luminance on the ordinate is expressed as a relative value when the emission luminance of the prior [ZnS: Cu, Au, Al] phosphor is defined as 100%;
- FIG. 3(A): is a graph showing the variation of relative emission luminance in accordance with the amount of La content in a phosphor according to the present invention;
- FIG. 3(B): is a graph showing the change of x value of the color point in the standard Chromaticity Diagram System CIE with respect to the baking temperature, and compares the characteristics between the phosphor of the present invention (a) and the prior art (b);
- FIG. 3(C): is a graph showing the variation of the relative emission luminance with respect to the baking temperature and compares the characteristics between the prior phosphor (b) and the phosphor according to the present invention (a);
- FIG. 4: is a graph showing comparatively the emission spectra before heating(curve a) and after heating(curve b), the heating of the green emitting phosphor(ZnS: Cu Au Al M) (where M is at least one element selected from the group consisting of Tb, Sc and La) according to the present invention being carried out at 500°C for two hours.

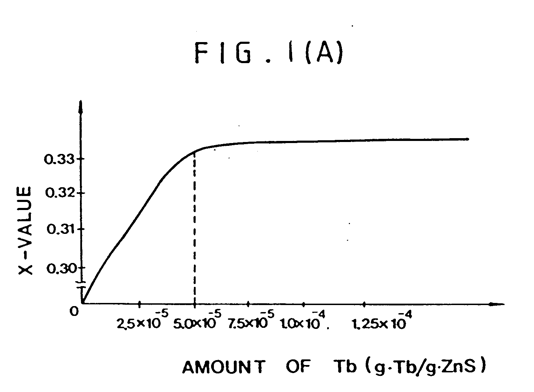

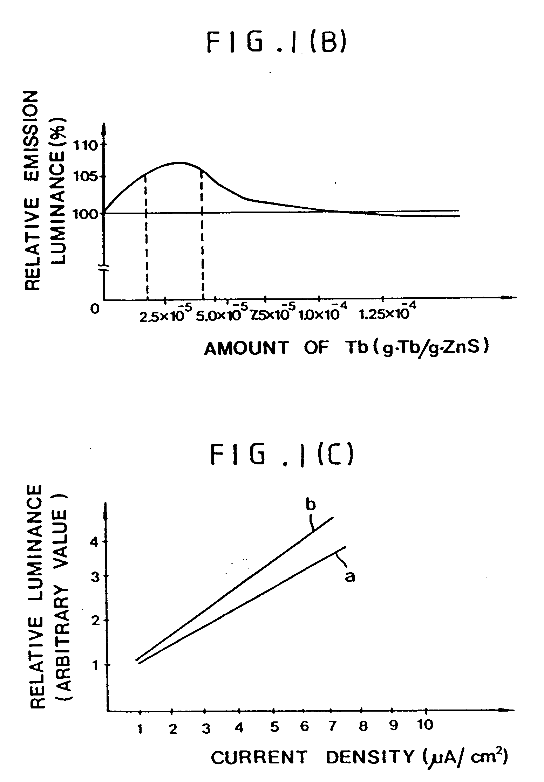

Figure 1(A) is an examplarily diagram of chromaticity against the variations of the content of terbium when copper, gold and aluminum are added respectively in amounts of 1.1 x 10⁻ ⁴ g, 1.5 x 10⁻ ⁴ g, and 3 x 10⁻ ⁴ g, per 1 gram of the host material zinc sulphide. Here, it is shown that, in the specific range where the terbium content is more than 0 and less than 5.0 x 10⁻ ⁵ g, the chromaticity is steeply varied.

Figure 1(B) shows the variations of the emission luminance against the variations of the terbium content when copper, gold and aluminum are added respectively in amounts of 1.1 x 10⁻ ⁴ g, 1.5 x 10⁻ ⁴ g, and 3 x 10⁻ ⁴ g per 1 gram of the host material zinc sulphide. This drawing shows relative figures as against the case where the conventional [ZnS: Cu Au Al] phosphor which does not contain terbium is assumed to have the emission luminance of 100%, and that the emission luminance is markedly improved within the range where the terbium content comes between 2.0 x 10⁻ ⁵ g, and 4.0 x 10⁻ ⁵ g.

Figure 1(C) is an examplary diagram showing the relative luminance values as against the variations of the current density when the phosphor is composed such that, per 1 gram of the host material zinc sulphide, copper, gold and aluminum are added respectively in the amounts of 1.1 x 10⁻ ⁴ g, 1.5 x 10⁻ ⁴ g, and 3 x 10⁻ ⁴ g and terbium is added in the amount of 3.0 x 10⁻ ⁵ g, where the curve (a) represents the characteristics of a conventional phosphor and the curve (b) represents the characteristics of a phosphor according to the present invention.

Although Figure 1(C) gives a graphical illustration of the characteristics of the phosphor according to the present invention based on the condition that the contents of copper, gold and aluminum are 1.1 x 10⁻ ⁴ g, 1.5 x 10⁻ ⁴ g and 3 x 10⁻ ⁴ g respectively, a phosphor having different contents of copper, gold and aluminum is confirmed to display substantially the same trend as that of Figure 1(C) if terbium is added into the phosphor.

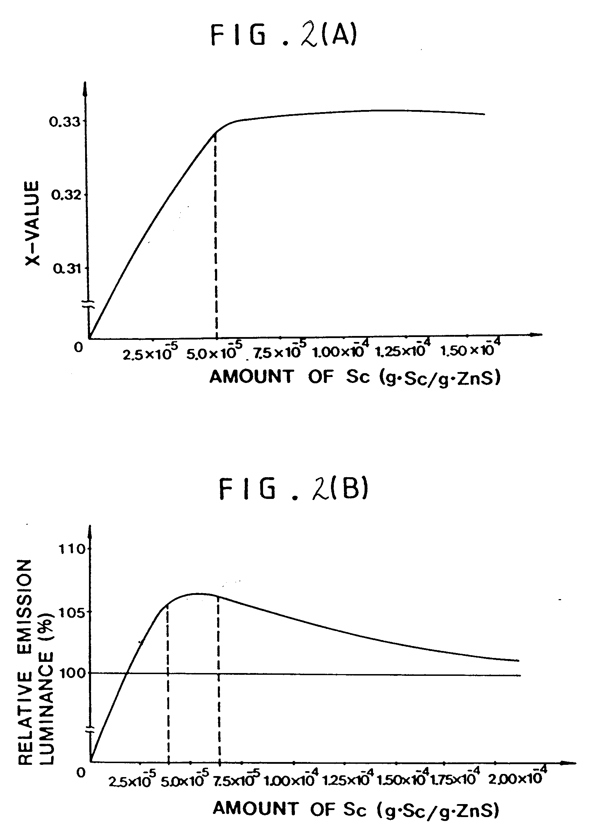

Figure 2(A) illustrates a case where the amounts of copper, gold and aluminum are 1.1 x 10⁻ ⁴ g, 2.0 x 10⁻ ⁴ g and 2.2 x 10⁻ ⁴ g respectively per 1 gram of the host material zinc sulphide, and here it can be observed that the chromaticity CIE is steeply varied in the section where the content of scandium is more than 0 and less than 5 x 10⁻ ⁵ g .

Figure 2(B) shows the variations of the emission luminance as against the variations of the content of scandium in a phosphor according to the present invention in which the amounts of copper, gold and aluminum are 1.1 x 10⁻ ⁴ g, 2.0 x 10⁻ ⁴ g and 2.2 x 10⁻ ⁴ g respectively per 1 gram of the host materical zinc sulphide, with the values being relative ones as against the case where the conventional phosphor (ZnS: Cu Au Al) without containing scandium is assumed to have the emission luminance of 100%.

As can be seen in Figure 2(B), the green emitting phosphor according to the present invention displays a markedly improved emission luminance in the range where the content of scandium is between 4.0 x 10⁻ ⁵ g and 6.0 x 10⁻ ⁵ g.

Although this drawing shows the case where the amount of copper and gold is 1.1 x 10⁻ ⁴ g and 2.0 x 10⁻ ⁴ g respectively, even in the case where the contents of the copper and gold are different, the phosphor according to the present invention containing scandium shows substantially the same trend as that of Figure 2(B).

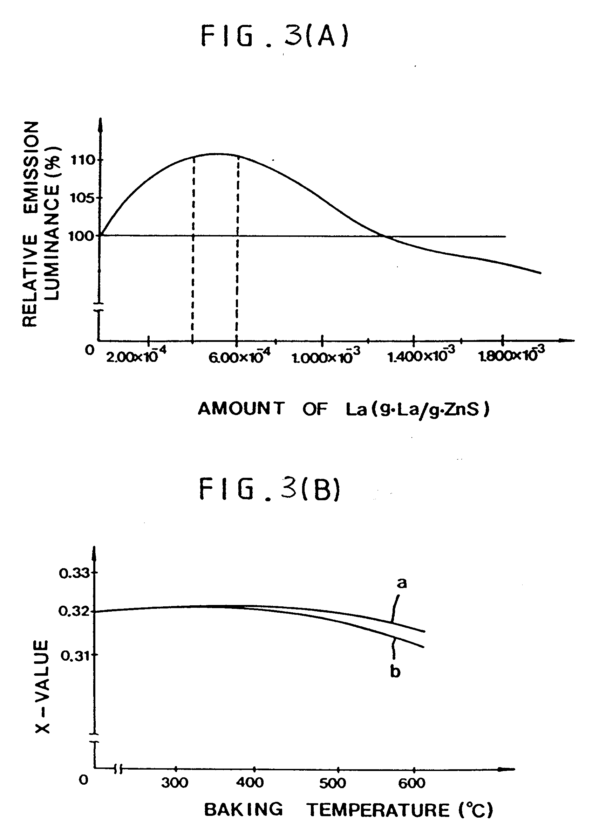

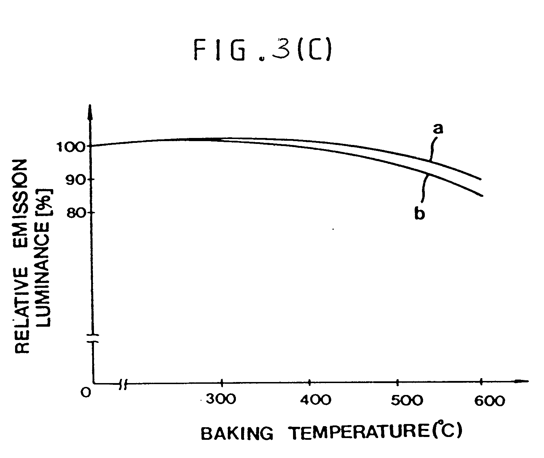

Figure 3(A) shows the relative variations of the emission luminance as against the variations of the content of lanthanum (La) in [ZnS: Cu Au Al] phosphor of the present invention in which the amounts of copper, gold and aluminum are 1.1 x 10⁻ ⁴ g, 1.5 x 10⁻ ⁴ g and 3 x 10⁻ ⁴ g respectively per 1 gram of the host material zinc sulphide, with the values being relative ones as against the case where the conventional [ZnS: Cu Au Al] phosphor which does not contain lanthanum (La) is assumed to have the emission luminance of 100%.

As is exemplified in Figure 3(A), the emission luminance markedly improved in the range where the content of lanthanum is between 4.0 x 10⁻ ⁴ g and 6.0 x 10⁻ ⁶ g.

Figure 3(B) shows the variations of the chromaticity CIE as against the variations of the baking temperature, the curve (a) representing the characteristics of the phosphor according to the present invention in which, per 1 gram of the host material zinc sulphide, the contents of copper, gold and aluminum are 1.1 x 10⁻ ⁴ g, 1.5 x 10⁻ ⁴ g and 3 x 10⁻ ⁴ g respectively, and the content of lanthanum is 4 x 10⁻ ⁴ g and the curve (b) represents the characteristics of the conventional phosphor without containing lanthanum (La).

As can be seen in Figure 3B, the phosphor according to the present invention containing lanthanum has superior characteristics over the conventional one.

Furthermore, even in the case where the contents of copper, gold and aluminum are different from the values specified above, it has been confirmed that the phospohor according to the present invention containing lanthanum showed substantially the same trend as that of Figure 3(B).

Figure 3(C) shows the relative variations of the emission luminance as against the variations of the baking temperature, with the curve (a) representing the characteristics of the phosphor according to the present invention in which the contents of copper, gold, aluminum and lanthanum are 1.1 x 10⁻ ⁴ g, 1.5 x 10⁻ ⁴ g, 3 x 10⁻ ⁴ g and 5 x 10⁻ ⁴ g respectively, and with the curve (b) representing the characteristics of the conventional phosphor without containing lanthanum.

Furthermore, even in the case where the contents of copper, gold and aluminum are different from the value specified above, the phosphor according to the present invention containing lanthanum is confirmed to have almost the same trend as that of Figure 3(C).

Furthermore, the cathode ray tube for use in a color television using the green emitting phosphor (ZnS: Cu Au Al M) (where M is at least one element of Tb, Sc, and La) according to the present invention makes it easy to carry out the baking process compared with the conventional color cathode ray tube using the convertional green emitting phosphor (ZnS: Cu Au Al).

The conventional green emitting phosphor(ZnS: Cu Au Al) is stable up to the temperature of 300°C , but the luminance is lowered beyond the said temperature. In contrast to this, the green emitting phosphor (ZnS: Cu Au Al M) (where M is at least one element of Tb, Sc and La) according to the present invention is stable up to the temperature of about 500°C , and there is no lowering of the luminance.

In manufacturing a cathode ray tube, the baking step carried out when forming the phosphor layer is aimed at decomposing and removing the binders in the phosphor layer, and therefore, it is required that it be carried out at a temperature of over 400°C .

Accordingly, it is usually carried out in the temperature range of 450 ∼ 480°C in consideration of the work efficiency, the phosphor [ZnS: Cu Au Al M] (where M is at least one element of Tb, Sc and La) used in the cathode ray tube of the present invention shows a perfect stability at the usual baking temperature, and there appears to be no decrease of luminance.

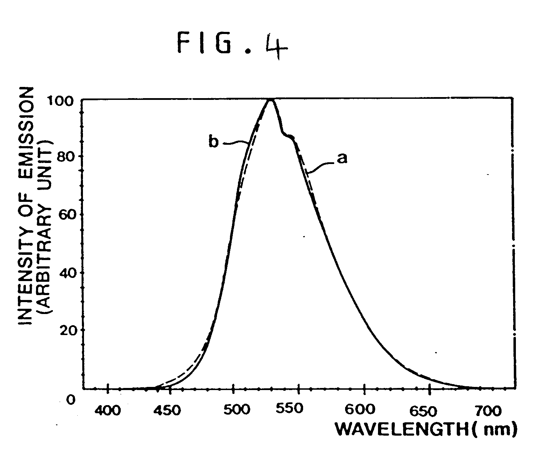

Figure 4 shows the emission spectra before and after the baking process of the green emitting phosphor (ZnS: Cu Au Al M) (where M is at least one element of Tb, Sc and La) according to the present invention. That is, this drawing shows comparatively spectra before heating (curve a) and after the heating (curve b), the heating of the green emitting phosphor [ZnS: Cu Au Al M] (where M indicates at least one element of Tb, Sc and La) according to the present invention being carried out at 500°C for two hours.

As can be seen in Figure 4, in contrast to the conventional phosphor (ZnS: Cu Au Al),when the cathode ray tube is manufactured using the green emitting phosphor of the present invention, there is no displacement of the spectra toward the shorter wavelength side during the formation of the phosphor layer at the usual baking temperature (450 ∼ 480°C ).

As described above the present invention provides a cathode ray tube provided with a phosphor layer having a green component constituted by the green emitting phosphor [ZnS: Cu Au Al M] (where M is at least one element of Tb, Sc and La) according to the present invention.

However, the cathode ray tube according to the present invention can be applied not only to a color television, but also a uni-color cathode ray tube having a phosphor layer constituted by the phosphor [ZnS: Cu Au Al M] (where M indicates at least one element of Tb, Sc and La).

Further, the cathode ray tube according to the present invention can also be manufactured by the usual method without using the said green emitting phosphor [ZnS: Cu Au Al M] (where M is at least one element of Tb, Sc and La). That is, the phosphor layer of the cathode ray tube according to the present invention can be prepared by the ordinary slurry method.

Now the present invention will be further described with the help of the following examples.

### EXAMPLE 1

| | | |
|---|---|---|
| * Zinc sulphide | ZnS | 1,000g |
| * Terbium oxide | Tb₄ O₇ | 0.023g |
| * Copper sulphate | CuSO₄ · 5H₂ O | 0.431g |
| * Chloroauric acid | HAuCl₄ · 2H₂ O | 0.285g |
| * Aluminum nitrate | Al(NO₃ )₃ · 9H₂ O | 4.17g |
| * Ammonium chloride | NH₄ Cl | 1.2g |
| * Sulfur | S | 25g |

The above materials were sufficiently mixed together by means of a ball mill, and the resulting mixture was filled into a pot. After closing the pot with a cap, the pot was put into an electric kiln to bake it under a reducing atmosphere containing carbon dioxide at 980°C for 1 hour.

After completion of the baking process, the baked product was taken out of the pot, washed and dried. Thus the Terbium-conventional phosphor (ZnS: Cu Au Al Tb) according to the present invention was obtained in which the contents of Terbium and the activating copper, gold and aluminum were 2 x 10⁻ ⁵ g, 1.1 x 10⁻ ⁴ g, 1.5 x 10 ⁻ ⁴ g and 3 x 10⁻ ⁴ g respectively per 1 gram of the host material zinc sulphide.

Thus the emission chromaticity point for the phosphor of the present invention was measured by an ordinary method, as a result, the chromaticity point was X=0.312 and Y=0.601.

The said phosphor according to the present invention displayed the emission color having the longer wavelength and its luminance level was 104% compared with the conventional [ZnS: Cu Au Al] phosphor which does not contain terbium but with the same contents of the activating copper, gold and aluminum.

The chromaticity point for the conventional phosphor which does not contain terbium was X=0.301 and Y=0.604.

### EXAMPLE 2

| | | |
|---|---|---|
| * Zinc sulphide | ZnS | 1,000g |
| * Terbium oxide | Tb₄ O₇ | 0.035g |
| * Copper sulphate | CuSO₄ · 5H₂ O | 0.392g |
| * Chloroauric acid | HAuCl₄ · 2H₂ O | 0.342g |
| * Aluminum sulphate | Al₂ (SO₄ )₃ · 18H₂ O | 0.196g |
| * Potassium iodide | KI | 2g |
| * Ammonium iodide | NH₄ I | 1.3g |
| * Sulfur | S | 30g |

The above materials were sufficiently mixed together by means of a ball mill, and the resulting mixture was filled into a pot. After closing the pot with a cap, the pot was put into an electric kiln to bake it under a reducing atmosphere containing carbon dioxide at 1,000°C for 1.5 hours.

After the completion of the baking process,the baked product was taken out of the pot, washed and dried. The terbium-conventional phosphor (ZnS: Cu Au Al Tb) according to the present invention was obtained in which the contents of terbium and the activating copper, gold and aluminum were 3 x 10⁻ ⁵ g, 1.0 x 10⁻ ⁴ g, 1.8 x 10 ⁻ ⁴ g and 4.0 x 10⁻ ⁴ g respectively per 1 gram of the host material zinc sulphide.

Thus the emission chromaticity point for the phosphor of the present invention was measured by an ordinary method, and as a result, the chromaticity point was X=0.327 and Y=0.595.

The chromaticity point for the conventional phosphor which does not contain terbium was X=0.313 and Y=0.603.

The said phosphor according to the present invention displayed the emission color having the longer wavelength and its luminance level was 106% compared with the conventional [ZnS: Cu Au Al] phosphor without containing terbium but with the same contents of the activating copper, gold and aluminum.

### EXAMPLE 3

| | | |
|---|---|---|
| * Zinc sulphide | ZnS | 1,000g |
| * Terbium fluoride | TbF₃ | 0.054g |
| * Copper sulphate | CuSO₄ · 5H₂ O | 0.353g |
| * Chloroauric acid | HAuCl₄ · 2H₂ O | 0.38g |
| * Aluminum nitrate | Al(NO₃ )₃ · 9H₂ O | 6.95g |
| * Potassium iodide | KI | 1.5g |
| * Ammonium iodide | NH₄ I | 1.6g |
| * Sulfur | S | 35g |

The above materials were sufficiently mixed together by means of a ball mill, and the resulting mixture was filled into a pot. After closing the pot with a cap, the pot was put into an electric kiln to bake it at 980°C for 3 hours. The terbium-conventional phosphor (ZnS: Cu Au Al Tb) according to the present invention was obtained in which the contents of terbium and the activating copper, gold and aluminum were 4 x 10⁻ ⁵ g, 9 x 10⁻ ⁵ g, 2 x 10⁻ ⁴ g and 5 x 10⁻ ⁴ g respectively per 1 gram of the host material zinc sulphide.

The chromaticity point for the phosphor of the present invention was X=0.384 and Y=0.587, while the chromaticity point for the conventional phosphor (ZnS: Cu Au Al) was almost the same, that is, X=0.321 and Y=0.598.

The emission luminance of the phosphor according to the present invention was 106% compared with the conventional [ZnS: Cu Au Al] phosphor which does not contain terbium but with the same contents of a copper, gold and aluminum.

Thus, the phosphor according to the present invention improved its emission luminance since it has the emission color of the longer wavelength.

### EXAMPLE 4

| | | |
|---|---|---|
| * Zinc sulphide | ZnS | 1,000g |
| * Scandium oxide | Sc₂ O₃ | 0.062g |
| * Copper sulphate | CuSO₄ · 5H₂ O | 0.431g |
| * Chloroauric acid | HAuCl₄ · 2H₂ O | 0.38g |
| * Aluminum nitrate | Al(NO₃ )₃ · 9H₂ O | 3.058g |
| * Ammonium chloride | NH₄ Cl | 1.5g |
| * Sulfur | S | 20g |

The above materials were sufficiently mixed together by means of a ball mill, and the resulting mixture was filled into a pot. After closing the pot with a cap, the pot was put into an electric kiln to bake it under an atmosphere of hydrogen sulfide containing carbon disulfide at 950°C for 1 hour. After the completion of the baking process, the baked product was taken out of the pot, washed and dried. A scandium-containing phosphor (ZnS: Cu Au Al Sc) according to the present invention was obtained in which the contents of scandium and the activating copper, gold and aluminum were 4 x 10⁻ ⁵ g, 1.1 x 10⁻ ⁴ g, 2.0 x 10⁻ ⁴ g and 2.2 x 10⁻ ⁴ g respectively per 1 gram of the host material zinc sulphide.

The emission color point for the phosphor of the present invention was X=0.325 and Y=605, while the chromaticity point for the conventional phosphor (ZnS: Cu Au Al) was almost the same, that is, X=0.315 and Y=606.

The said phosphor according to the present invention showed the longer wavelength and its luminance level was increased 4% compared with the conventional phosphor without containing scandium.

### EXAMPLE 5

| | | |
|---|---|---|
| * Zinc sulphide | ZnS | 1,000g |
| * Scandium oxide | Sc₂ O₃ | 0.077g |
| * Copper sulphate | CuSO₄ · 5H₂ O | 0.392g |
| * Chloroauric acid | HAuCl₄ · 2H₂ O | 0.38g |
| * Aluminum sulphate | Al₂ (SO₄ )₃ · 18H₂ O | 0.496g |
| * Potassium iodide | KI | 1.5g |
| * Ammonium iodide | NH₄ I | 1.0g |
| * Sulfur | S | 30g |

The above materials were sufficiently mixed together by means of a ball mill, and the resulting mixture was filled into a pot. After closing the pot with a cap, the pot was put into an electric kiln to bake it under a reducing atmosphere containing carbon disulfide at 1000°C for 1.5 hours.

After the completion of the baking process, the baked prouct was taken out of the pot, washed and dried. Thus the scandium-containing phosphor [ZnS: Cu Au Al Sc] according to the present invention was obtained in which the contents of scandium and the activating copper, gold and aluminun were 5.0 x 10⁻ ⁵ g, 1.0 x 10 ⁻ ⁴ g, 2.0 x 10⁻ ⁴ g and 4.0 x 10⁻ ⁴ g respectively per 1 gram of the host material zinc sulphide.

The emission color point in the standard chromaticity Diagram System CIE for the above mentioned phosphor was X=0.330 and Y=601, while the emission color point for the conventional phosphor(ZnS: Cu Au Al) was X=0.321, Y=605.

Thus the phosphor according to the present invention showed the emission color of the longer wavelength and its emission luminance level was increased 5.7% compared with the conventional phosphor.

### EXAMPLE 6

| | | |
|---|---|---|
| * Zinc sulphide | ZnS | 1,000g |
| * Scandium oxide | Sc₂ O₃ | 0.092g |
| * Copper sulphate | CuSO₄ · 5H₂ O | 0.353g |
| * Chloroauric acid | HAuCl₄ · 2H₂ O | 0.342g |
| * Aluminum nitrate | Al(NO₃ )₃ · 9H₂ O | 6.95g |
| * Potassium iodide | KI | 1.2g |
| * Ammonium iodide | NH₄ I | 1.4g |
| * Sulfur | S | 35g |

The above materials were sufficiently mixed together by means of a ball mill, and the resulting mixture was filled into a pot. After closing the pot with a cap, the pot was put into an electric kiln to bake it under a reducing atmosphere containing carbon disulfide at 1030°C for 2 hours. After the completion of the baking process, the baked product was taken out of the pot, washed and dried. A scandium-containing phosphor (ZnS: Cu Au Al Sc) according to the present invention was obtained in which the contents of scandium and the activating copper, gold and aluminum were 6.0 x 10⁻ ⁵ g, 9.0 x 10⁻ ⁵ g, 1.8 x 10⁻ ⁴ g and 5.0 x 10⁻ ⁴ g respectively per 1 gram of the host material zinc sulphide.

The emission color point in the Standard chromaticity Diagram System CIE for the above mentioned phosphor was X=0.329 and Y=603 while the emission color point for the conventional phosphor(ZnS: Cu Au Al) was X=0.313 and Y=602.

Thus the phosphor according to the present invention showed the emission color of the longer wavelength and its emission luminance level was 4.3% compared with the conventional phosphor which does not contain scandium.

### EXAMPLE 7

| | | |
|---|---|---|
| * Zinc sulphide | ZnS | 1,000g |
| * Lanthanium oxide | La₂ O₃ | 0.141g |
| * Copper sulphate | CuSO₄ · 5H₂ O | 0.431g |
| * Chloroauric acid | HAuCl₄ · 2H₂ O | 0.285g |
| * Aluminum nitrate | Al(NO₃ )₃ · 9H₂ O | 4.17g |
| * Ammonium chloride | NH₄ Cl | 1.6g |
| * Sulfur | S | 30g |

The above materials were sufficiently mixed together by means of a ball mill, and the resulting mixture was filled into a pot. After closing the pot with a cap, the pot was put into an electric kiln to bake it under a reducing atmosphere containing carbon disulfide at 980°C for 1 hour.

After completion of the baking process, the baked product was taken out of the pot, washed and dried. A lanthanium-containing phosphor (ZnS: Cu Au Al La) according to the present invention was obtained in which the contents of lanthanium and the activating copper, gold and aluminum were 4 x 10⁻ ⁴ g, 1.1 x 10⁻ ⁴ g, 1.5 x 10⁻ ⁴ g and 3.0 x 10⁻ ⁴ g respectively per 1 gram of the host material zinc sulphide.

The above mentioned phosphor was put into the baking furnace to measure the characteristic value depending upon the temperature variation. As a result, it can be seen that the baking characteristics of the phosphor according to the present invention are improved more than the conventional phosphor which does not contain lanthanium as is shown in FIG 3(B) and FIG 3(C). And also the relative emission luminance was measured before the baking process, as a result it was increased 9% compared with the conventional phosphor without containing lanthanium.

### EXAMPLE 8

| | | |
|---|---|---|
| * Zinc sulphide | ZnS | 1,000g |
| * Lanthanium oxide | La₂ O₃ | 0.176g |
| * Copper sulphate | CuSO₄ · 5H₂ O | 0.392g |
| * Chloroauric acid | HAuCl₄ · 2H₂ O | 0.342g |
| * Aluminum sulphate | Al₂ (SO₄ )₃ · 18H₂ O | 0.496g |
| * Potassium iodide | KI | 7.5g |
| * Ammonium iodide | NH₄ I | 1.2g |
| * Sulfur | S | 27g |

The above materials were sufficiently mixed together by means of a ball mill, and the resulting mixture was filled into a pot. After closing the pot with a cap, the pot was put into an electric kiln to bake it under a reducing atmosphere containing carbon disulfide at 1000°C for 1.5 hours.

After completion of the baking process, the baked product was taken out of the pot, washed and dried. A lanthanium-containing phosphor (ZnS: Cu Au Al La) according to the present invention was obtained in which the contents of lanthanium and the copper, gold and aluminum were 5 x 10⁻ ⁴ g, 1.0 x 10⁻ ⁴ g, 1.8 x 10⁻ ⁴ g and 4 x 10⁻ ⁴ g respectively per 1 gram of the host material zinc sulphide.

The above mentioned phosphor was put into the baking kiln to measure the characteristic value depending upon the temperature variation. As a result, it can be seen that the baking characteristics of the phosphor according to the present invention are improved more than the conventional phosphor which does not contain lanthanium as is shown in FIG 3(B) and FIG 3(C). And also the relative emission luminance was measured before the baking process, as a result it was increased 10.5% compared with the conventional phosphor without containing lanthanium.

### EXAMPLE 9

| | | |
|---|---|---|
| * Zinc sulphide | ZnS | 1,000g |
| * Lanthanium oxide | La₂ O₃ | 0.211g |
| * Copper sulphate | CuSO₄ · 5H₂ O | 0.353g |
| * Chloroauric acid | HAuCl₄ · 2H₂ O | 0.38g |
| * Aluminum nitrate | Al(NO₃ )₃ · 9H₂ O | 6.95g |
| * Ammonium iodide | NH₄ I | 1.2g |
| * Sulfur | S | 25g |

The above materials were sufficiently mixed together by means of a ball mill, and the resulting mixture was filled into a pot. After closing the pot with a cap, the pot was put into an electric kiln to bake under a reducing atmosphere containing carbon disculfide at 1050°C for 2 hours.

After completion of the baking process, the baked product was taken out of the pot, washed and dried. The lanthanium-containing phosphor (ZnS: Cu Au Al La) according to the present invention was obtained in which the contents of lanthanium and the copper, gold and aluminum were 6 x 10⁻ ⁴ g, 9.5 x 10⁻ ⁵ g, 2 x 10⁻ ⁵ g and 5 x 10⁻ ⁴ g respectively per 1 gram of the host material zinc sulphide.

The above mentioned phosphor was put into the baking kiln to measure the characteristic value depending upon the temperature variation. As a result, it can be seen that the baking characteristics of the phosphor according to the present invention are improved more than the conventional phosphor which does not contain lanthanum as it shown in FIGS 3(B) and FIG 3(C). And also the relative emission luminance was measured before the baking process, as a result it was increased 8% compared with the conventional phosphor without containing lanthanium.

### COMPARATIVE EXAMPLE

| | | |
|---|---|---|
| * Zinc sulphide | ZnS | 1,000g |
| * Copper sulphate | CuSO₄ · 5H₂ O | 0.392g |
| * Chloroauric acid | HAuCl₄ · 2H₂ O | 0.342g |
| * Aluminum sulphate | Al(NO₃ )₃ · 9H₂ O | 0.490g |
| * Potassium iodide | KI | 2g |
| * Ammonium iodide | NH₄ I | 1.3g |
| * Sulfur | S | 30g |

The above materials were sufficiently mixed together by means of a ball mill, and 5.0 x 10⁻ ⁵ g of at least one element selected from the group consistingof Tb, Sc and La is added to the said misture as a oxide form, and then they are mixed sufficiently. Thereafter, they are subjected to baking treatment
The phosphor according to the present invention is increased each 19%, 10%, 2%, 5.7%, and 4% compared with the conventional phosphor which does not contain Tb, Sc and La compared as the emission CIE (X=0.313, Y=0.603) of the phosphor without containing Tb, Sc, and La, that (X=0.313, Y=0.602) by the addition of Sc is not changed, and that (X=0.330, Y=0.601) by the addition of Sc, that (X=0.327, Y=0.595) by the addition of Tb are shifted toward the longer wavelength side.

A cathode ray tube for use in a green emitting phosphor [ZnS: Cu, Au, Al, M] (where M is at least one element selected from the group consisting of Tb, Sc and La) according to the present invention is the longer life expectancy compared with the conventional [ZnS: Cu, Au, Al] phosphor because it does not enhance the current value applied to the red color cathode of electron gun and reduces the overcharge of the red color cathode of electron gun to obtain the same white color luminance.

Thus, according to the present invention, in the process for preparing [ZnS: Cu Au Al] green emitting phosphor, the emission luminance of the phosphor prepared by the addition of Tb, Sc is enhanced, and has the characteristics of longer wavelength compared with the conventional phosphor containing the same contents of the activator, and also that of the phosphor prepared by the addition of La is enhanced and improves the heating characteristics in the baking process in the formation of the phosphor layer, thereby making the longer life expectancy of a cathode ray tube and can obtain a bright image having a high contrast. The above mentioned cathode ray tube does not cause decrease of the emission luminance and shift to the shorter wavelength side of the emission spectra after the baking process in the formation of the phosphor layer and has the phosphor layer formed by a thermally stable and high luminance green emitting phosphor and particularily it can be a color cathode ray tube.

## Claims

1. A green emitting phosphor comprising 2 x 10⁻⁵ to 3 x 10⁻⁴ g of copper, 5 x 10⁻⁵ to 2.5 x 10⁻³ g of gold, and 3.5 x 10⁻⁵ to 5.0 x 10⁻² g of aluminium per 1 gram of the host material zinc sulphide, characterized in that the said phosphor further comprises at least one element selected from the group:
1) terbium (Tb) in an amount of more than 0 to 6 x 10⁻⁵g,
2) scandium (Sc) in an amount of more than 0 to 2.0 x 10⁻⁴g, and
3) lanthanum (La) in an amount of more than 0 to 1.2 x10⁻³g,
per gram of zinc sulphide.

2. A phosphor as claimed in claim 1 comprising 8 x10⁻⁵ to 1.7 x 10⁻⁴g of copper, 8 x 10⁻⁵ to 5 x 10⁻⁴g of gold, and 1 x 10⁻⁴ to 1 x 10⁻³g of aluminum per 1 gram of the host material zinc sulfide.

3. A phosphor as claimed in claim 1 or claim 2 comprising at least one element selected from the group:
1) teribum in an amount of 2.0 x 10⁻⁵ to 4 x 10⁻⁵g;
2) scandium in an amount of 2 x 10⁻⁵ to 8.0 x 10⁻⁵g; and
3) lanthanum in an amount of 2 x 10⁻⁴ to 8 x 10⁻⁴g.

4. A process for preparing a green emitting phosphor as claimed in claim 1, said process comprising
(a) preparing a mixture of zinc sulphide, Cu, Au, Al and at least one element selected from Tb, Sc and La, each element being present as a compound thereof, and a flux agent, in the requisite amounts;
(b) baking the mixture thereby produced under a reducing atmosphere at 950°C to 1050°C for 30 minutes to 6 hours; and
(c) washing, drying and grading the thus produced phosphor.

5. A color cathode ray tube comprising a panel the inner surface of which is coated with a green emitting phosphor as claimed in any one of claims 1 to 3.

6. A color cathode ray tube as claimed in claim 5 wherein the inner surface of said panel thereof is coated with a green emitting phosphor displaying a constant level of emission luminance, the said green emitting phosphor having been baked within the temperature range of 300 to 500°C.

7. A television receiver comprising a color cathode ray tube as claimed in claim 5 or claim 6.

## Patentansprüche

1. Grün emittierender Phosphor, umfassend 2 x 10⁻⁵ bis 3 x 10⁻⁴ g Kupfer, 5 x 10⁻⁵ bis 2,5 x 10⁻³ g Gold und 3,5 x 10⁻⁵ bis 5,0 x 10⁻² g Aluminium pro 1 g des Wirtsmaterials Zinksulfid, dadurch gekennzeichnet, daß der Phosphor zusätzlich mindestens ein Element, ausgewählt aus der Gruppe:
1) Terbium (Tb) in einer Menge von mehr als 0 bis 6 x 10⁻⁵ g,
2) Scandium (Sc) in einer Menge von mehr als 0 bis 2,0 x 10⁻⁴ g, und
3) Lanthan (La) in einer Menge von mehr als 0 bis 1,2 x 10⁻³ g,
pro Gramm Zinksulfid umfaßt.

2. Phosphor nach Anspruch 1, umfassend 8 x 10⁻⁵ bis 1,7 x 10⁻⁴ g Kupfer, 8 x 10⁻⁵ bis 5 x 10⁻⁴ g Gold und 1 x 10⁻⁴ bis 1 x 10⁻³ g Aluminium pro 1 g des Wirtsmaterials Zinksulfid.

3. Phosphor nach Anspruch 1 oder 2, umfassend mindestens ein Element, ausgewählt aus der Gruppe:
1) Terbium in einer Menge von 2,0 x 10⁻⁵ bis 4 x 10⁻⁵ g,
2) Scandium in einer Menge von 2 x 10⁻⁵ bis 8,0 x 10⁻⁵ g, und
3) Lanthan in einer Menge von 2 x 10⁻⁴ bis 8 x 10⁻⁴ g.

4. Verfahren zur Herstellung eines grün emittierenden Phosphors nach Anspruch 1, wobei das verfahren umfaßt
(a) Herstellen eines Gemisches von Zinksulfid, Cu, Au, Al und mindestens einem Element, ausgewählt aus Tb, Sc und La, wobei jedes Element als eine Verbindung davon vorliegt und einem Flußmittel, in den erforderlichen Mengen;
(b) Brennen des dadurch erhaltenen Gemisches unter reduzierender Atmosphäre bei 950°C bis 1050°C für 30 Minuten bis 6 Stunden; und
(c) Waschen, Trocknen und Sichten des so erhaltenen Phosphors.

5. Farbkathodenstrahlröhre, umfassend eine Platte deren Innenfläche mit einem grün emittierenden Phosphor nach einem der Ansprüche 1 bis 3 beschichtet ist.

6. Farbkathodenstrahlröhre nach Anspruch 5, wobei die innere Fläche der Platte davon mit einem grün emittierenden Phosphor beschichtet ist, der einen konstanten Grad an Emissionsbildleuchtdichte zeigt, wobei der grünemittierende Phosphor in einem Temperaturbereich von 300 bis 500°C gebrannt wurde.

7. Fernsehempfänger, umfassend eine Farbkathodenstrahlröhre nach Anspruch 5 oder Anspruch 6.

## Revendications

1. Substance luminescente émettant une lumière verte comprenant 2 x 10⁻⁵ à 3 x 10⁻⁴ g de cuivre, 5 x 10⁻⁵ à 2,5 x 10⁻³g d'or et 3,5 x 10⁻⁵ à 5,0 x 10⁻² g d'aluminium pour 1 gramme du sulfure de zinc, qui est le matériau récepteur, caractérisée en ce que ladite substance luminescente comporte en outre au moins un élément choisi dans le groupe :
1) terbium (Tb), en une quantité supérieure à 0 à 6 x 10⁻⁵ g,
2) scandium (Sc), en une quantité supérieure à 0 à 2,0 x 10⁻⁴ g, et
3) lanthane (La), en une quantité supérieure à 0 à 1,2 x 10⁻³ g,
par gramme de sulfure de zinc.

2. Substance luminescente selon la revendication 1, comprenant 8 x 10⁻⁵ à 1,7 x 10⁻⁴ g de cuivre, 8 x 10⁻⁵ à 5 x 10⁻⁴ g d'or, et 1 x 10⁻⁴ à 1 x 10⁻³ g d'aluminium pour 1 gramme de sulfure de zinc qui est le matériau récepteur.

3. Substance luminescente selon la revendication 1 ou 2, comprenant au moins un élément choisi dans le groupe :
1) terbium (Tb), en une quantité de 2,0 x 10⁻⁵ à 4 x 10⁻⁵ g,
2) scandium (Sc), en une quantité de 2 x 10⁻⁵ à 8,0 x 10⁻⁵ g, et
3) lanthane (La), en une quantité de 2 x 10⁻⁴ à 8 x 10⁻⁴ g.

4. Procédé pour préparer une substance luminescente émettant une lumière verte selon la revendication 1, ledit procédé comprenant
a) la préparation d'un mélange de sulfure de zinc, Cu, Au et Al et d'au moins un élément choisi parmi Tb, Sc et La, chaque élément étant présent sous la forme d'un composé de cet élément, et un agent formant flux, et ce en les quantités requises;
b) cuire le mélange ainsi obtenu dans une atmosphère réductrice entre 950°C et 1050°C pendant une durée de 30 minutes à 6 heures; et
c) laver, sécher et étalonner la substance luminescente ainsi produite.

5. Tube cathodique en couleurs comprenant un panneau dont la surface intérieure est recouverte d'une substance luminescente émettant une lumière verte, telle que revendiquée selon l'une quelconque des revendications 1 à 3.

6. Tube cathodique en couleurs selon la revendication 5, dans lequel la surface intérieure dudit panneau est recouverte par une substance luminescente émettant une lumière verte, qui produit un niveau constant de luminance d'émission, ladite substance luminescente émettant une lumière verte ayant été cuite dans une gamme de températures de 300 à 500°C.

7. Récepteur de télévision comprenant un tube cathodique en couleurs tel que revendiqué dans la revendication 5 ou 6.
